Europäisches Patentamt

European Patent Office

Office européen des brevets

(11) Numéro de publication: **0 502 755 B1**

# FASCICULE DE BREVET EUROPEEN

(45) Date de publication de fascicule du brevet: **02.08.95**

(51) Int. Cl.6: **F16F 7/12**, B60R 22/28

(21) Numéro de dépôt: **92400456.7**

(22) Date de dépôt: **21.02.92**

(54) **Dispositif de décélération progressive d'un passager.**

(30) Priorité: **01.03.91 FR 9102473**

(43) Date de publication de la demande:
**09.09.92 Bulletin  92/37**

(45) Mention de la délivrance du brevet:
**02.08.95 Bulletin  95/31**

(84) Etats contractants désignés:
**BE DE GB IT SE**

(56) Documents cités:
**FR-A- 2 307 555**
**FR-A- 2 336 148**
**US-A- 2 785 775**
**US-A- 3 089 564**
**US-A- 3 438 674**

(73) Titulaire: **THOMSON-BRANDT ARMEMENTS**
**Tour Chenonceaux**
**204, rond-point du Pont de Sèvres**
**F-92516 Boulogne-Billancourt (FR)**

(72) Inventeur: **Morel, Christophe**
**THOMSON-CSF,**
**SCPI,**
**Cédex 67**
**F-92045 Paris la Défense (FR)**
Inventeur: **Thouron, René**
**THOMSON-CSF,**
**SCPI,**
**Cédex 67**
**F-92045 Paris la Défense (FR)**

(74) Mandataire: **Benoit, Monique et al**
**THOMSON-CSF**
**SCPI**
**B.P. 329**
**50, rue Jean-Pierre Timbaud**
**F-92402 Courbevoie Cédex (FR)**

# Description

L'invention se situe dans le domaine des dispositifs destinés à ralentir et éventuellement à freiner un mobile selon une loi de décélération prévue.

Plus précisément l'invention se situe dans le domaine des dispositifs destinés à maintenir un passager d'un véhicule en cas de choc.

Les dispositifs actuellement utilisés sont des ceintures de sécurité. Ces ceintures comportent une sangle abdominale et une sangle d'épaule. Elles sont fixées sur la voiture en trois points : deux points plancher et un point haut. Les ceintures comportent en général un enrouleur se déroulant librement et assurant une tension permanente de la ceinture. En cas de choc un dispositif de blocage, fonctionnant en général par inertie bloque le déroulement de la ceinture en cas de déroulement trop rapide.

De tels dispositifs de blocage peuvent être associés à des enrouleurs actifs qui en cas de chocs ont pour but de ramener le passager de façon serrée sur son siège, et de compenser les effets de relâchement dus à l'allongement de la ceinture sous l'effet des forces de traction exercées par le passager. Un tel dispositif est décrit par exemple dans le brevet DE n° 3.903.148.

De tels dispositifs ont pour inconvénient de plaquer le thorax du passager à son siège en sorte que l'énergie de décélération est entièrement absorbée par son thorax. Par ailleurs la tête du passager qui est libre, est projetée violemment vers l'avant alors que le corps reste immobile. Ces deux effets conjugués conduisent à des lésions importantes. Ces effets sont décrits de façon plus détaillée dans la revue "Automobile Magazine" n° 553 de novembre 1990 dans un article intitulé "La seconde où tout bascule" en particulier aux pages 78 et 79. Il est important pour éviter ces lésions de maintenir le passager avec une force contrôlée lui permettant une décélération progressive et contrôlée. A cette fin le dispositif décrit dans la demande de brevet n° FR 2.646.388 décrit un dispositif dont le but est d'assurer un amortissement des effets de blocage de la ceinture. Ce dispositif fonctionne à l'aide de ressorts qui exercent sur une partie mobile de la ceinture une force de compression opposée à l'effort de traction en cas de choc. Pour assurer une progressivité de l'amortissement plusieurs ressorts entrent en action les uns après les autres. Un tel dispositif présente deux inconvénients, d'une part en raison du vieillissement, la force exercée par les ressorts va varier de façon incontrôlée et d'autre part l'assemblage qui comporte de nombreuses pièces est de ce fait d'un prix prohibitif.

Un autre mode d'absorption de l'énergie du corps à freiner, plus proche de l'invention que ceux ci-dessus décrits, est décrit dans le brevet US 3 089 564. Un cable 38 maintenant le corps à freiner est enfermé dans un logement longiligne dont il ne peut sortir que par écartement de lèvres qui ont été préalablement rabattues sur le cable. La progression en avant du cable d'une longeur d, ne peut se faire que par déformation sur la même longueur des lèvres enserrant le cable.

Dans un tel dispositif la force excercée sur le cable est par construction constante, or pour que la puissance absorbée soit constante on a interêt à augmenter la force de retenue lorsque le cable ralentit.

Un des buts de la présente invention est donc de fournir sous une forme compacte, comportant peu de pièces un dispositif assurant quel que soit son vieillissement, une décélération contrôlée du passager. Pour cela le dispositif selon l'invention utilise le procédé décrit dans la demande de brevet n° FR 90.12288 non encore publiée en l'adaptant au cas de la décélération d'un passager. Cette adaptation comporte deux modalités. D'une part le dispositif doit être aussi compact que possible, d'autre part il ne fonctionnera qu'à partir d'une force minimum exercée par le passager sur la ceinture. Enfin s'agissant d'un produit de grande diffusion il doit être bon marché.

On rappelle que l'invention décrite dans la demande de brevet n° 90.12288 était relative à un procédé de freinage progressif d'un câble accroché à un mobile se déplaçant dans une direction D caractérisé en ce que l'avancement du câble dans la direction D d'une longueur d est utilisé pour cisailler une épaisseur e de matière sur la même longueur d dégageant ainsi un copeau de longueur d. Elle était également relative à un dispositif de freinage progressif d'un câble accroché à un mobile, progressant dans une direction D caractérisé en ce qu'il comporte un corps comportant une surface à partir de laquelle est creusée une gorge, dans laquelle est logé le câble à freiner, le creusement de la gorge provoquant sensiblement parallèlement à la direction D et tout le long de la gorge un affaiblissement relatif de parties du corps à la résistance au cisaillement, des moyens pour maintenir le câble dans le logement constitué par la gorge de telle sorte que la sortie de la gorge d'une longueur d de câble dans la direction D ne puisse se produire que par cisaillement sur la même longueur d des parties du corps affaiblies à la résistance au cisaillement par le creusement de la gorge.

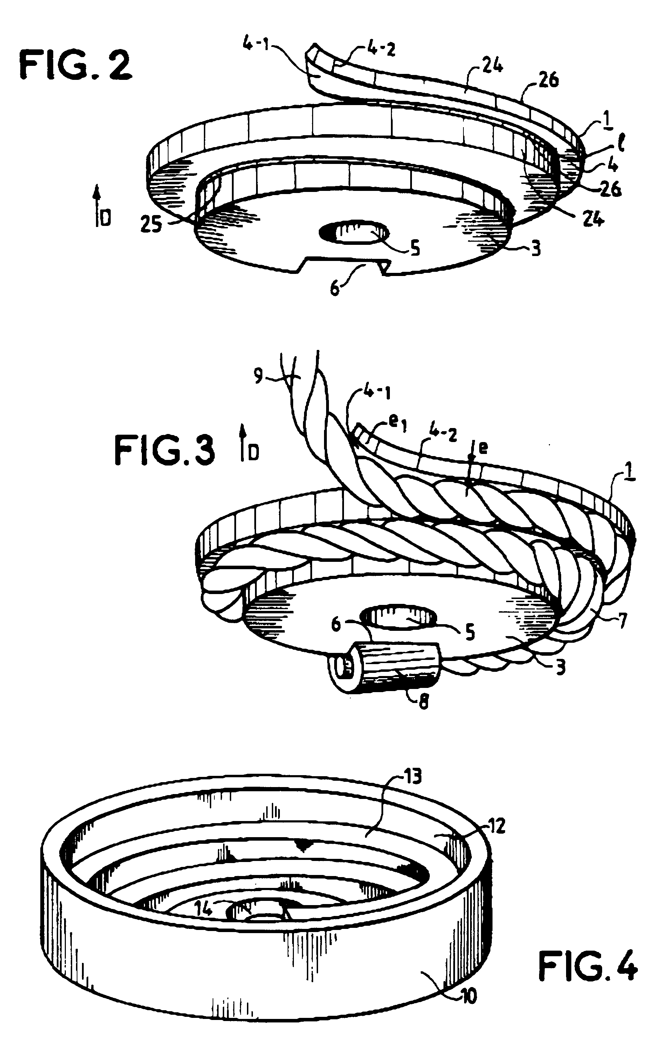

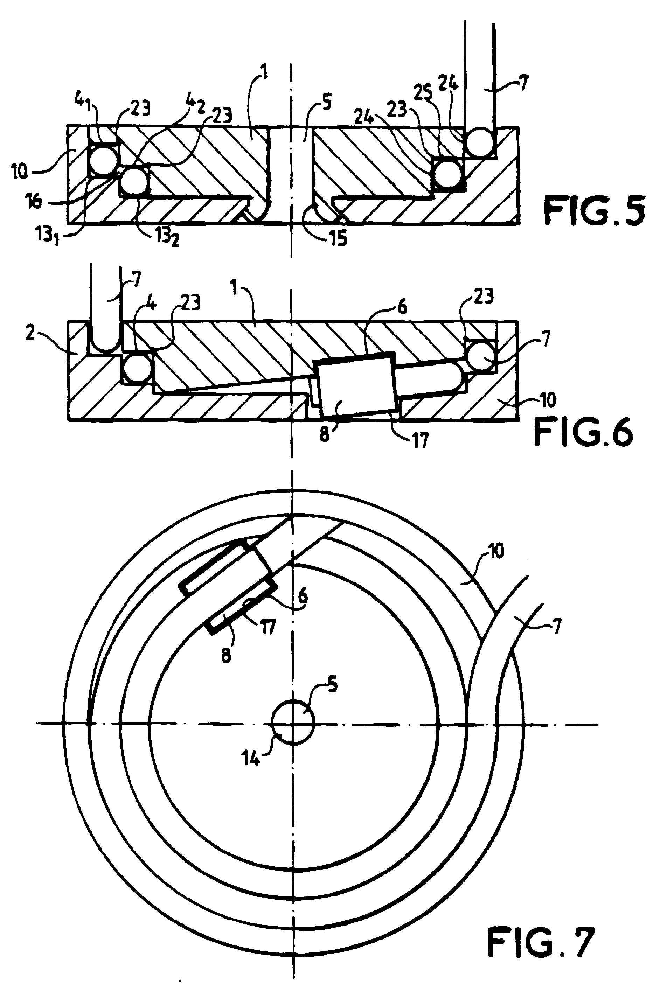

Un exemple de réalisation d'un tel dispositif exécuté en référence aux figures 4 et 5 jointes à la demande était décrit. Il était conforme au dispositif sous la forme générale décrite ci-dessus et "caractérisé en ce que le corps était une plaque dont les faces étaient perpendiculaires à la direction D et comportait sur l'une de ses faces une gorge dont l'axe médian (15) décrit une courbe sans point de rebroussement, terminée par un trou 12".

Dans le dispositif décrit dans la demande de brevet n° 90.12288 la coopération entre le corps qui est une pièce à cisailler, et les moyens de fixation du câble était réalisée sur une seule face. La corps maintenait le câble selon 3 faces et les moyens de fixation obturaient la face restante.

Dans la présente invention afin de réaliser un dispositif compact et bon marché la gorge, dont l'usinage est cher et le moulage délicat, a été supprimée.

La coincement du câble est assuré par la coopération sur deux faces de la pièce à cisailler et de son couvercle.

Dans la présente invention la pièce à cisailler assure le maintien du câble sur deux faces et les moyens de fixation viennent compléter les deux faces manquantes pour emprisonner le câble dans un logement longiligne dans la section droite duquel la section droite du câble est inscrite.

L'invention est donc relative à un dispositif de freinage d'un câble accroché à un mobile, le câble comportant deux extrémités, une ligne axiale et un périmètre de section droite et dont l'une des extrémités est susceptible de se mouvoir sous l'action du mobile dans une direction D, du type dans lequel une partie du câble comportant l'autre extrémité est enfermée dans un logement de forme longiligne constitué par l'assemblage de deux pièces, une première A et une seconde B, caractérisé en ce que le périmètre d'une section droite transversale du logement étant constitué d'une partie a appartenant à la section droite de la pièce A, d'une partie b appartenant à la section droite de la pièce B la progression du câble dans la direction D d'une longueur d ne pouvant s'effectuer que par cisaillement sur la même longueur d mesurée le long d'une ligne dite de cisaillement I, d'une épaisseur e de la pièce A, épaisseur e mesurée selon la direction D, et en ce que la partie a est constituée de deux segments $a_1$, $a_2$ adjacent perpendiculaires dont l'un , $a_2$ est parallèle à la direction D, le périmètre du câble étant tangent à chacun des deux segments $a_1$, $a_2$.

Le lieu des segments $a_1$ définit sur la pièce de cisaillement A une surface S. Cette surface définit elle-même sur la pièce A une sorte de chemin. Pour des raisons tenant au relief de la pièce A ce chemin sera par la suite appelé rampe de la pièce 1. Les bords de la rampe sont le lieu des points qui sont les extrémités du segment $a_1$. La ligne médiane de la rampe est le lieu des points, milieu du segment $a_1$. Le lieu des points où le périmètre du câble est tangent au segment $a_1$ constitue la surface d'appui du câble.

Il a été dit plus haut que l'on souhaitait pour cette réalisation éviter les reliefs en forme de gorge, il s'ensuit que de préférence la rampe aura l'un de ses bords qui coïncidera au moins sur une certaine longueur avec le bord de la pièce à cisailler et l'autre avec la ligne de cisaillement I.

De préférence la ligne médiane de la rampe suivra une courbe en spirale dont la projection du pas sur un plan perpendiculaire à la direction D, sera égale à la largeur de la rampe.

Enfin de préférence l'épaisseur $\underline{e}$ à cisailler sera une fonction monotone croisssante de d.

Diverses sections droites des pièces A et B, un exemple préférentiel de réalisation ainsi que d'autres exemples seront décrits en références aux dessins annexés dans lesquels :

- La figure 1 (a, b, c, d, e) représente divers modes de réalisation de la section droite des pièces A et B répondant aux spécifications de l'invention.
- La figure 2 est un schéma représentant en perspective la pièce de cisaillement de l'exemple préféré de réalisation.
- La figure 3 représente la même pièce assemblée avec le câble.
- La figure 4 représente une vue en perspective de la pièce de fixation du câble.
- Las figures 5 et 6 représentent chacune une vue en coupe de la pièce de fixation et de la pièce de cisaillement assemblées, de l'exemple préféré de réalisation.
- La figure 7 représente une vue de dessus du dispositif selon l'invention dans l'exemple préféré de réalisation.
- La figure 8 représente une vue en coupe longitudinale d'un autre exemple de réalisation.
- La figure 9 représente une vue de dessus de l'exemple de réalisation de la figure 8.
- La figure 10 représente un troisième exemple de réalisation.
- Les figures 11, 12 et 13 sont représentatives de l'implantation du dispositif selon l'invention dans l'application à l'automobile.

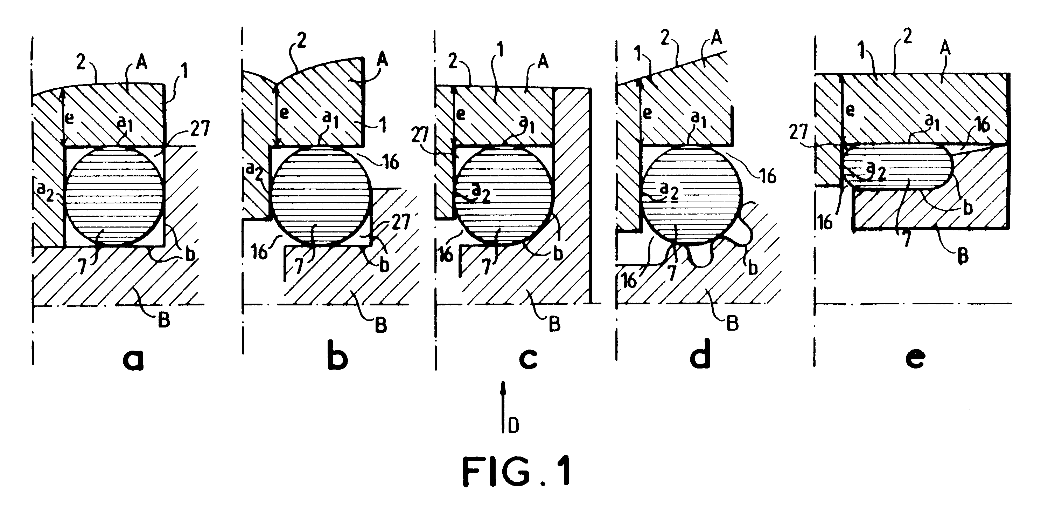

La figure 1 (a, b, c, d, e) représente diverses sections droites de pièces A et B réalisées selon les spécifications de l'invention. Ces sections droites sont artificiellement limitées à la partie contenant une section droite du câble à freiner.

Sur les figures 1 a, b, c, d le câble 7 est de section droite circulaire de diamètre 2r. Sur la figure 1e le câble est une tresse plate dont la section droite est rectangulaire à bords latéraux arrondis.

Sur chacune de ces figures on voit la pièce A, 1, et la pièce B 2. Entre ces deux pièces subsiste un vide 27 qui constitue la section droite du logement du câble. Dans toutes les représentations le périmètre du logement 27 est constitué de parties $a_1$, $a_2$ appartenant à la pièce A, d'une partie b appartenant à la pièce B. Ces deux parties ne constituent pas nécessairement une courbe fermée entourant le câble, ainsi sur les figures 1 b, c, d, e, il subsiste des parties 16 vides. La dimension et la forme de ces parties sont telles qu'elles n'autorisent pas le passage du câble 7. Cela signifie que la plus grande dimension d'une partie 16 doit être inférieure à la plus petite dimension de la section droite du câble 7.

Les parties $a_1$ et $a_2$, délimitant sur la section droite de la pièce 1 les bords du logement 27 du câble 7, sont dans tous les cas constituées de deux segments $a_1$, $a_2$ perpendiculaires entre eux et adjacents. L'un des côtés $a_2$ est parallèle à la direction D de traction du câble matérialisée pour l'ensemble des figures par une flèche. La longueur du segment $a_1$ peut être égale à la projection parallèlement à D du périmètre du câble, comme représenté figure 1a, c, d, et e ou inférieure comme représenté figure 1d. La longueur du segment $a_2$ peut être égale à la projection perpendiculairement à D du périmètre du câble 7 comme représenté figure 1a ou inférieure comme représenté sur les autres figures. La projection de la ligne de cisaillement, I, a été représentée par un point marqué I sur les figures.

Cette ligne est sur les figures à la jonction des segments $a_1$ et $a_2$. Cet emplacement a été jugé pratique du fait que l'angle droit constitue en lui-même une amorce de rupture.

Il est cependant souhaitable de renforcer cette amorce par une encoche. Il ne serait pas contraire à l'invention de disposer la ligne de cisaillement en un autre endroit du segment $a_1$ par exemple au point de tangence de $a_1$ et du câble 7.

On fera remarquer que la longueur du segment $a_1$ s'entend de la longueur du segment bordant la section droite du logement 27 du câble 7. Ainsi dans le cas représenté figure 1e où la coupe de la pièce A, a une ligne qui prolonge le segment $a_1$ au delà du logement 27, la longueur de $a_1$ s'entend comme la longueur de la projection du périmètre du câble 7 parallèlement à D. Ceci compris on constate que la longueur du segment $a_1$ n'est jamais supérieure à la longueur du segment représentant la projection selon D du périmètre du câble.

On remarquera également que les différentes sections droites d'une même réalisation peuvent être différentes et se présenter en différents endroits comme ayant les formes représentées par exemple figures 1a, b, ou c.

Enfin on remarquera que la face opposée 2 à la surface S par rapport à la direction D peut avoir des formes diverses, ainsi sur la figure 1a, la forme est arrondie, sur la figure 1b, la forme de la face 2 est telle que l'épaisseur de la pièce A est moindre au droit de la ligne I que dans les parties voisines, elle peut être plate comme sur les figures 1c et 1e ou présenter une fente par rapport à $a_1$ comme représenté figure 1b. Les différents exemples représentés ne sont pas limitatifs de ce qui pourrait être fait sans sortir des limites de l'invention. La forme de la face 2, sera choisie en fonction des contraintes de volume imposées par la forme de l'emplacement où le dispositif doit être installé, par la nécessité éventuelle de jouer sur la forme de cette face pour obtenir en complément à un relief de la surface S une variation de l'épaisseur e le long de la ligne de cisaillement et enfin par des considérations de coût de fabrication et de masse du dispositif qui doivent être aussi faibles que possible.

La partie de périmètre de logement du câble 7 constitué par la pièce B peut avoir des sections droites b de formes variées. L'essentiel est que le contour b assure une fermeture du logement ne laissant subsister que des ouvertures c de plus grande dimension inférieure à la plus petite dimension de la section droite du câble, de façon que le câble ne puisse s'échapper par cette ouverture même sous contrainte. Sur les figures 1a à 1e différentes formes de section droite de la pièce B ont été représentées.

Sur les figures 1a et 1b la section droite du périmètre b de la pièce B est formé de deux segments perpendiculaires adjacents égaux aux segments $a_1$ et $a_2$ dans le cas de la figure 1a inégaux et inférieurs à la projection du périmètre du câble 7 selon des directions parallèles et perpendiculaires à D dans le cas de la figure 1b.

Ces mêmes segments sont raccordés par un arrondi dans le cas des figures 1c et 1e. Cet arrondi peut aller de la forme d'un simple congé de raccordement jusqu'à épouser la forme de la section droite du câble.

Enfin dans le cas de la figure 1d, la forme du périmètre de la section droite comporte des bossages successifs venant tangenter en plusieurs points le périmètre du câble. Ces bossages peuvent être obtenus soit sous forme d'ondulations continues dans le sens longitudinal, soit de plots répartis de proche en proche de façon suffisamment dense pour assurer une bonne fixation du câble.

Différentes formes non limitatives de réalisation de sections droites selon l'invention ayant été décrite il sera décrit ci-après de façon détaillée un exemple préféré de réalisation des pièces A et B selon l'invention et de façon plus succincte quelques exemples possibles de réalisation. Ces derniers ne sont décrits que pour illustrer la portée de l'invention et bien montrer qu'une grande diversité de formes de réalisation est possible. La forme des sections droites possibles étant connue il suffit pour réaliser l'invention de définir une forme de la ligne médiane de la surface S, et une loi de freinage. Cette loi de décélération déterminera la valeur de l'épaisseur e initiale et la loi de variation de e. Ces paramétres : forme de la ligne médiane et loi de variation de e définissent les aspects fonctionnels essentiels de la pièce A selon l'invention. La partie fonctionnelie de la pièce B n'est qu'une contreforme de la pièce A équipée du câble, contreforme destinée à terminer le logement du câble A.

L'exemple préféré de réalisation sera maintenant décrit en référence aux figures 2 à 7.

La figure 2 représente en perspective une pièce dite de cisaillement 1. Cette pièce présente deux faces, une face plane 2 non visible sur cette figure et une face opposée 3 présentant un relief sous forme d'une rampe 4 qui dans le cas de la réalisation a la forme d'une spirale. La pièce 1 comporte un trou central traversant 5 et un logement 6 pour un manchon 8 de retenue d'un câble. Pour éviter le cisaillement du câble le début 4-1 de la rampe 4 comporte un arrondi 4-2. La projection parallèlement à la direction D du pas de la rampe est égale à une largeur de rampe. Au fur et à mesure qu'un bord 25 de la rampe est cisaillé la rampe reste bordée à l'endroit de la sortie du câble par une face latérale libre 24 d'un côté et le bord à cisailler 25 de l'autre. Si l'on définit la face latérale 26 de la pièce 1 comme la face perpendiculaire à un plan perpendiculaire à la direction D, il s'en suit que la face latérale 24 de la rampe 4 coïncide avec la face latérale 26 de la pièce 1.

La figure 3 représente la même pièce 1 assemblée avec un câble 7 dans la même configuration. Ce câble a l'une de ses extrémités maintenue par un manchon 8 prenant appui dans le logement 6 de la pièce 1.

L'autre extrémité 9 du câble 7 est reliée à une ceinture de sécurité non représentée.

Lorsqu'une traction suffisamment forte est exercée sur l'extrémité 9 du câble, ce dernier exerce sur la rampe 4 une force tendant à cisailler la pièce 1 au niveau de la jonction entre le début 4-2 de la rampe 4 et le reste de la pièce. L'épaisseur e à cisailler va en progressant. L'épaisseur $e_1$ du début 4-2 de la rampe est fixée de telle sorte que le cisaillement ne puisse commencer que sous l'exercice d'une force suffisante.

Dans cet exemple de réalisation de la pièce 1, l'épaisseur e est déterminée en fonction de la force de retenue que l'on souhaite exercer sur le câble, l'épaisseur $e_1$ du début de cisaillement étant à calculer en fonction du seuil de déclenchement souhaité.

Dans l'exemple de réalisation le début de cisaillement intervient pour un passager de 75 kg placé dans une voiture roulant à 14m/s et subissant un arrêt brutal (choc contre un mur de béton).

La figure 4 est une vue en perspective d'une pièce de fixation 10 conjuguée avec la pièce formée par l'assemblage des pièces 1, 7 et 8 de façon à emprisonner le câble.

Cette pièce comporte une face 11 non vue sur la figure 3, qui dans le cas de la réalisation est plane. La forme de la face 11 de la pièce 10 peut être adaptée pour faciliter l'adaptation à l'emplacement de fixation du dispositif selon l'invention, dans l'automobile. Cette pièce 10 comporte une autre face 12 qui comporte un relief. Ce relief a la forme d une rampe 13. La pièce 10 comporte un trou central 14. La pièce 1 assemblée avec le câble 7 et son manchon 8 vient s'emboîter dans la pièce de fixation 10. Lorsque cet emboîtement est réalisé les trous 14 et 5 sont coaxiaux, le relief de la face 3 tel que modifié par l'assemblage avec le câble 7 et le manchon 8 épouse le relief en creux de la face 13 de la pièce 10 en sorte que le câble 7 est alors enfermé dans un logement dont la sortie ne peut se faire que par cisaillement de la pièce 1.

L'assemblage des pièces 1, 10, 7, et 8 est représenté en coupe figure 5. Sur cette figure on voit les pièces 1 et 10 ainsi que leurs rampes respectives 4 et 13 qui en coupe ont des formes d'escalier.

La largeur d'une marche est égale à la largeur d'une rampe, 4 ou 13. La coupe de la pièce 1 comporte au niveau du raccordement de la marche au reste de la pièce 1 une encoche 23 constituant une amorce de rupture. Cette amorce suit le bord I de la rampe qui est à cisailler tout au long de la rampe ; dans le cas de la réalisation où le câble est cylindrique et en acier, la largeur de la rampe est égale au diamètre du câble. Il est possible sans changer la nature de l'invention de concevoir une rampe de plus petite largeur par exemple pour augmenter la compacité. La hauteur d'une marche de la pièce 1 est égale à la progression de l'épaisseur e en un tour de spirale. Si cette progression $\Delta e$ d'épaisseur n'est pas au moins égale à un diamètre de câble comme représenté sur la partie gauche de la figure 4 il subsiste une partie 16 de hauteur $h = d - \Delta e$, d désignant le diamètre du câble et $\Delta e$ l'accroissement d'épaisseur à cisailler en un tour. Il convient que h reste inférieur à d pour éviter toute sortie du câble. On notera qu'il est possible de donner au câble d'autres formes de section que circulaire. Dans certaines configurations le câble pourra être un câble plat. Sur la partie droite de la figure 5 la hauteur de la marche est égale à un diamètre de câble. La progression de la hauteur $\Delta e$ par unité de longueur de rampe n'est pas nécessairement linéaire. La loi de progression sera adaptée à la loi de freinage souhaitée. On notera également qu'il est possible de faire varier l'épaisseur e en modifiant la forme de la face 1.

La figure 6 représente une autre vue en coupe des pièces 1, 10, 7 et 8 vue faisant apparaître le logement 6 dans la pièce 1, et son complément 17 dans la pièce 10, du manchon 8 de retenue du câble 7.

La figure 7 est une vue de dessus du dispositif selon l'invention.

La forme particulière de réalisation qui a été exposée ci-dessus en relation aux figures 2 à 7 n'est qu'un exemple retenu pour sa compacité. La forme retenue peut cependant ne pas convenir pour certaines implantations et l'invention pourra prendre d'autres formes de réalisation.

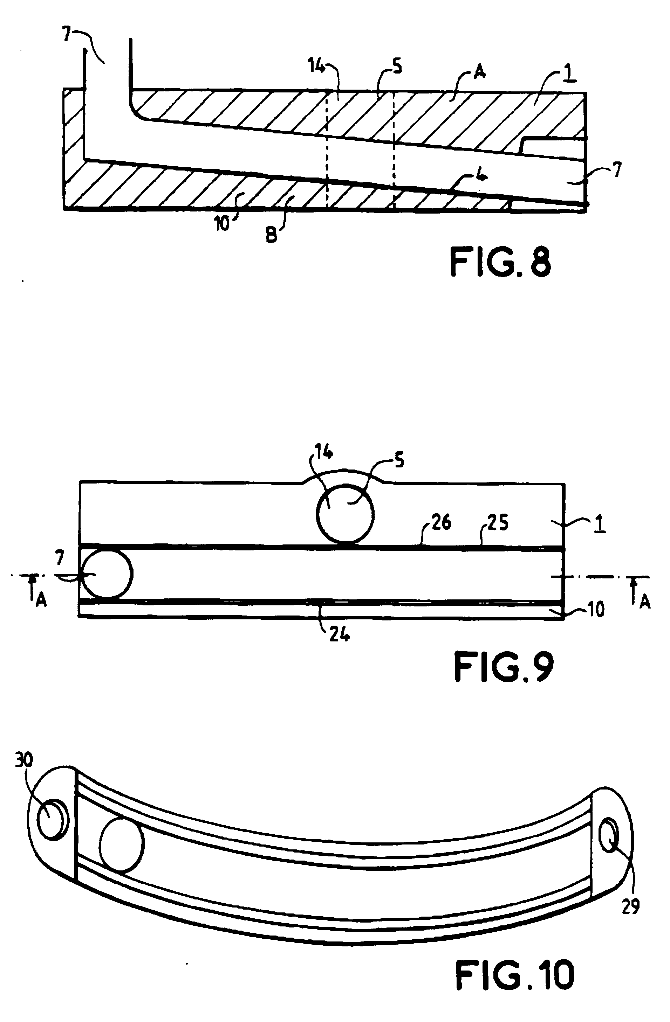

Ainsi sur la figure 8 il a été représenté une vue en coupe longitudinale d'un dispositif selon l'invention réalisée sous forme longiligne droite.

Cette coupe est réalisée selon l'axe AA de la vue de dessus représentée figure 9. Dans ce cas l'extrémité sortante du câble 7 sera implantée vers l'arrière du véhicule et il conviendra de tenir compte du fait que le point d'ancrage réel représenté par la partie de câble 7 à l'endroit où il cisaille la pièce 1 va avancer lors du choc et donc pour un même avancement autorisé du passager il conviendra de réduire la longueur à cisailler.

Cet exemple n'est évidemment pas limitatif. Le dispositif pourrait avoir en vue de dessus une forme d'arc de cercle comme représenté en vue de dessus figure 10 ou d'élipse et en général toute forme permettant un cisaillement sans à coup de la pièce de cisaillement 1.

De même si la fixation du dispositif par un seul boulon à travers des trous traversant (5-14) est avantageuse, elle peut être adaptée comme représenté figure 10 où l'assemblage des pièces 1 et 10 comporte à cette fin deux trous traversant (29-30).

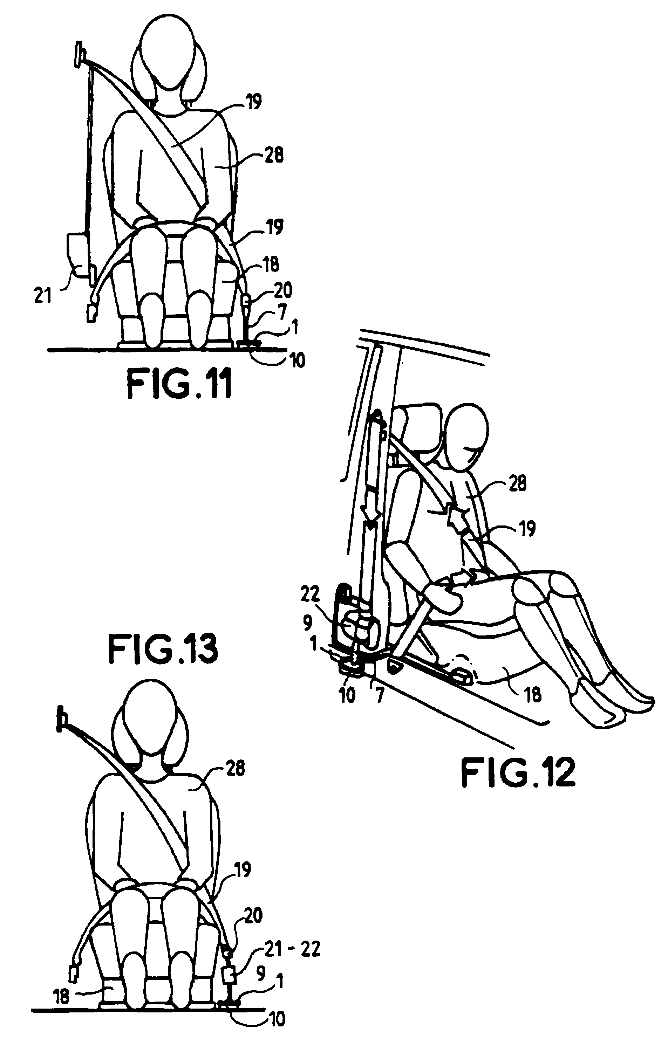

La figure 11 représente la vue de face d'une partie d'automobile équipée du dispositif selon l'invention. Hormis le dispositif, figuré par ses pièces extérieures 1, 10 et le câble 7 aucun des dispositifs représentés sur cette figure ne fait partie de l'invention. Sur cette figure on a représenté un passager 28, assis sur un siège 18 auquel il est retenu par un ceinture trois points 19. Cette ceinture est équipée d'un système de rattrapage mécanique à enrouleur 21 destiné à maintenir la ceinture serrée tout en permettant le mouvement du passager. Dans ce cas il est préférable mais non obligatoire de fixer le dispositif selon l'invention à l'endroit de la fixation habituelle du point d'ancrage bas latéral opposé diagonalement au point d'ancrage haut. L'extrémité du câble 7 est alors reliée à une partie de boucle 20. L'ensemble selon l'invention constitué des pièces 1, 7, 8, 10 est fixé à l'aide de boulons rondelles frein écrous (non représentés) qui passent à travers les trous 5-14 des pièces 1 et 10. On notera que ce mode de fixation assure la cohésion des pièces 1 et 10 lorsque le dispositif est en place.

La figure 12 représente les mêmes éléments que la figure 11. Dans le cas de la figure 12 la ceinture 19 est munie d'un système de rattrapage d'allongement à enrouleur pyrotechnique actif 22. Dans le cas représenté figure 12, le dispositif 22 est situé du côté du siège 18 comportant deux points de fixation de la ceinture. Dans ce cas on place au plancher le dispositif selon l'invention. L'extrémité libre 9 du câble 7 est reliée au dispositif de rattrapage 22. La partie de ceinture 19 fixée au dispositif 22 est raccordée au point haut de fixation. Le dispositif selon l'invention est fixé à l'automobile comme expliqué ci-dessus.

La figure 13 représente une autre implantation possible du système selon l'invention en amont d'un dispositif de rattrapage mécanique ou pyrotechnique 22. Dans le cas représenté figure 9 le dispositif 22 est situé du côté du siège 18 comportant un seul point de fixation de la ceinture. Dans ce cas on place au plancher le dispositif selon l'invention. L'extrémité libre 9 du câble 7 est reliée au dispositif de rattrapage 22. La partie de ceinture 19 fixée au dispositif 22 est raccordée à une boucle de la ceinture.

**Revendications**

1. Dispositif de freinage d'un câble (7) accroché à un mobile le câble (7) comportant deux extrémités une ligne axiale et un périmètre de section droite, l'une des extrémités (9) est susceptible de se mouvoir sous l'action du mobile dans une direction D, du type dans lequel une partie du câble (7) comportant l'autre extrémité est enfermée dans un logement (27) de forme longiligne constitué par l'assemblage de deux pièces, une première A et une seconde B, caractérisé en ce que le périmètre d'une section droite transversale du logement (27) est constitué d'une partie a appartenant à la section droite de la pièce A, d'une partie b appartenant à la section droite de la pièce B, la progression du câble dans la direction D d'une longueur d ne pouvant s'effectuer que par cisaillement sur la même longueur d mesurée le long d'une ligne dite de cisaillement l d'une épaisseur $\underline{e}$ de la pièce A, épaisseur $\underline{e}$ mesurée selon la direction D, et en ce que la partie a est constituée de deux segments $a_1$, $a_2$ adjacents perpendiculaires, dont l'un $a_2$ est parallèle à la direction D le périmètre du câble étant tangent à chacun des deux segments $a_1$, $a_2$.

2. Dispositif selon la revendication 1 caractérisé en ce que la ligne de cisaillement l est le lieu des points de l'une des extrémités du segment $a_1$.

**3.** Dispositif selon la revendication 1 caractérisé en ce que l'épaisseur $e$ à cisailler est une fonction monotone croissante de d.

**4.** dispositif selon la revendication 2 , caractérisé en ce que l'épaisseur $e$ à cisailler est une fonction monotone croissante de d.

**5.** Dispositif selon la revendication 1 caractérisé en ce que la surface S définie comme le lieu des segments $a_1$, a une ligne médiane rectiligne.

**6.** Dispositif selon la revendication 1, caractérisé en ce que la surface S définie comme le lieu des segments $a_1$ a une ligne médiane curviligne.

**7.** Dispositif selon la revendication 6, caractérisé en ce que la ligne médiane de la surface S a une forme de spirale.

**8.** Dispositif selon la revendication 7, caractérisé en ce que la projection de la spirale sur un plan perpendiculaire à D est une spirale ayant pour pas la dimension du segment $a_1$.

**9.** Dispositif selon la revendication 1 caractérisé en ce que l'assemblage des pièces A et B comporte au moins un trou traversant (5-14).

**10.** Dispositif selon la revendication 1, caractérisé en ce que l'assemblage des pièces A et B laisse subsister un espace (6-17) permettant de loger et fixer un manchon (8) du câble (7).

## Claims

**1.** Device for braking a cable (7) fastened to a movable member, the cable (7) being composed of two ends, an axial line and a cross-sectional perimeter, one of the ends (9) of which is capable of being moved under the action of the movable member in a direction D, of the type in which part of the cable (7) comprising the other end is enclosed in a housing (27) of elongate shape, constituted by the assembly of two pieces, a first piece A and a second piece B, characterized in that the perimeter of one transverse cross-section of the housing (27) consists of a part a belonging to the cross-section of the piece A, and of a part b belonging to the cross-section of the piece B, the progressive movement of the cable in the direction D of a length d being able to take place only by shear along the same length d measured along a so-called shear line l of a thickness $e$ of the piece A, which thickness $e$ is measured in the direction D, and in that the part a consists of two perpendicular adjacent segments $a_1$, $a_2$, one, $a_2$, of which is parallel to the direction D, the perimeter of the cable being tangential to each of the two segments $a_1$, $a_2$.

**2.** Device according to Claim 1, characterized in that the shear line l is the locus of the points of one of the ends of the segment $a_1$.

**3.** Device according to Claim 1, characterized in that the thickness $e$ to be sheared is an increasing monotonic function of d.

**4.** Device according to Claim 2, characterized in that the thickness $e$ to be sheared is an increasing monotonic function of d.

**5.** Device according to Claim 1, characterized in that the surface S, defined as the locus of the segments $a_1$, has a rectilinear mid-line.

**6.** Device according to Claim 1, characterized in that the surface S, defined as the locus of the segments $a_1$, has a curvilinear mid-line.

**7.** Device according to Claim 6, characterized in that the mid-line of the surface S has a spiral shape.

**8.** Device according to Claim 7, characterized in that the projection of the spiral on a plane perpendicular to D is a spiral having as pitch the dimension of the segment $a_1$.

**9.** Device according to Claim 1, characterized in that the assembly of pieces A and B comprises at least one through-hole (5-14).

**10.** Device according to Claim 1, characterized in that the assembly of pieces A and B leaves a space (6-17) making it possible to house and fix a sleeve (8) of the cable (7).

## Patentansprüche

**1.** Vorrichtung zum Bremsen eines Seils (7), das mit einem beweglichen Körper verbunden ist und zwei Enden, eine axiale Mittellinie und einen Querschnittumriß, wobei eines der Enden (9) unter der Wirkung des bewegten Körpers in einer Richtung D bewegt werden kann und ein Teil des Seils (7) mit dem anderen Ende in einem länglichen Raum (27) eingeschlossen ist, der durch Zusammenbau eines ersten und eines zweiten Bauteils A und B entsteht, dadurch gekennzeichnet, daß der Umriß eines Querschnitts des Raums (27) aus einem Bereich a, der zum Querschnitt des Bauteils A gehört, und einem Bereich b besteht, der zum Querschnitt des Bauteils B gehört, und daß die Bewegung des Seils in Richtung D um eine Länge d nur durch ein Abscheren des Bauteils A entlang einer gleichen Länge d entlang einer Scherlinie I mit einer Dicke e, gemessen in Richtung D, erfolgen kann, und daß der Bereich a aus zwei benachbarten, zueinander senkrechten Segmenten $a_1$, $a_2$ gebildet wird, von denen das eine, $a_2$, parallel zur Richtung D liegt und der Umriß des Seils die beiden Segmente $a_1$, $a_2$ berührt.

2. Vorrichtung nach Anspruch 1, dadurch gekennzeichnet, daß die Scherlinie I der Ort der Punkte eines der Enden des Segments $a_1$ ist.

3. Vorrichtung nach Anspruch 1, dadurch gekennzeichnet, daß die Scherdicke e eine monoton zunehmende Funktion von d ist.

4. Vorrichtung nach Anspruch 2, dadurch gekennzeichnet, daß die Scherdicke e eine monoton zunehmende Funktion von d ist.

5. Vorrichtung nach Anspruch 1, dadurch gekennzeichnet, daß die Oberfläche S, die als Ort der Segmente $a_1$ definiert ist, eine gerade Mittellinie besitzt.

6. Vorrichtung nach Anspruch 1, dadurch gekennzeichnet, daß die Oberfläche S, die als Ort der Segmente $a_1$ definiert ist, eine gekrümmte Mittellinie besitzt.

7. Vorrichtung nach Anspruch 6, dadurch gekennzeichnet, daß die Mittellinie der Oberfläche S spiralförmig ist.

8. Vorrichtung nach Anspruch 7, dadurch gekennzeichnet, daß die Projektion der Spirale auf eine Ebene senkrecht zu D eine Spirale ist, deren Schrittmaß der Abmessung des Segments $a_1$ entspricht.

9. Vorrichtung nach Anspruch 1, dadurch gekennzeichnet, daß für den Zusammenbau der Bauteile A und B mindestens ein durchgehendes Loch (5, 14) vorgesehen ist.

10. Vorrichtung nach Anspruch 1, dadurch gekennzeichnet, daß beim Zusammenbau der Bauteile A und B ein Raum (6, 17) verbleibt, in dem eine Haltehülse (8) des Seils (7) untergebracht und befestigt werden kann.

FIG. 1

**FIG. 2**

**FIG.3**

**FIG.4**

FIG.5

FIG.6

FIG.7

FIG. 8

FIG. 9

FIG. 10

**FIG.11**

**FIG.13**

**FIG.12**